(19) Europäisches Patentamt
European Patent Office
Office européen des brevets

(11) **EP 2 900 732 B1**

(12) **EUROPEAN PATENT SPECIFICATION**

(45) Date of publication and mention
of the grant of the patent:
**13.09.2017 Bulletin 2017/37**

(51) Int Cl.:
*C08G 77/08* (2006.01)  *C08G 77/58* (2006.01)
*C08L 83/04* (2006.01)  *C09D 183/04* (2006.01)

(21) Application number: **12812795.8**

(86) International application number:
**PCT/US2012/071013**

(22) Date of filing: **20.12.2012**

(87) International publication number:
**WO 2014/051650 (03.04.2014 Gazette 2014/14)**

(54) **DUAL CONDENSATION CURE SILICONE**

SILIKON MIT ZWEIFACH-KONDENSATIONSHÄRTUNG

SILICONE À DURCISSEMENT PAR CONDENSATION DOUBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2012 US 201261706852 P**

(43) Date of publication of application:
**05.08.2015 Bulletin 2015/32**

(73) Proprietor: **3M Innovative Properties Company**
**St. Paul, MN 55133-3427 (US)**

(72) Inventor: **RATHORE, Jitendra, S.**
**Saint Paul, MN 55133-3427 (US)**

(74) Representative: **Herzog, Fiesser & Partner**
**Patentanwälte PartG mbB**
**Isartorplatz 1**
**80331 München (DE)**

(56) References cited:
**US-A1- 2012 172 472**

**Description**

FIELD

The present disclosure relates to condensation cure silicone systems. Specifically, to dual condensation cure silicone systems including both an iron catalyst and a titanate ester. Methods of curing, cured compositions, and articles incorporating cured compositions are also described.

SUMMARY

Briefly, in one aspect, the present disclosure provides a dual cure silicone system comprising a silanol-functional polyorganosiloxane, a hydride-functional silane, an iron catalyst, and a Ti(IV) complex. In some embodiments, the system comprises two or more different silanol-functional polyorganosiloxanes.

The iron catalyst comprises at least one Fe(III) complex. In some embodiments, the Fe(III) catalyst is selected from the group consisting of iron (III) 2,4-pentanedionate, iron (III) 2,4-hexanedionate, iron (III) 2,4-heptanedionate, iron (III) 3,5-heptanedionate, iron (III) 1-phenyl-1,3-heptanedionate, iron (III) 1,3-diphenyl-1,3-propanedionate, iron (III) chloride, iron (III) bromide, and combinations thereof.

The Ti(IV) complex is titanium(IV) 2-ethylhexoxide.

In some embodiments, the dual cure silicone system comprises 1 to 5 weight percent of the Fe(III) catalyst and 2 to 10 weight percent of the Ti(IV) complex, based on the total weight of the silanol-functional polyorganosiloxane, the hydride-functional silane, the Fe(III) catalyst, and the Ti(IV) complex.

In another aspect, the present disclosure provides an article comprising a crosslinked silicone layer comprising the reaction product of a dual cure silicone system of the present disclosure. In some embodiments, the article further comprises a substrate, wherein the crosslinked silicone layer covers at least a portion of a first surface of the substrate. In some embodiments, the article further comprises an adhesive layer, wherein the adhesive layer covers at least a portion of the crosslinked silicone layer.

The above summary of the present disclosure is not intended to describe each embodiment of the present invention. The details of one or more embodiments of the invention are also set forth in the description below. Other features, objects, and advantages of the invention will be apparent from the description and from the claims.

BRIEF DESCRIPTION OF THE DRAWINGS

FIG. 1 illustrates an exemplary release article according to some embodiments of the present disclosure.
FIG.2 illustrates an exemplary adhesive article according to some embodiments of the present disclosure.

DETAILED DESCRIPTION

Curable silicone materials are useful in a variety of applications. For example, some curable silicone systems can be used to prepare release materials, e.g., release coatings for adhesives including, e.g., pressure sensitive adhesives. Silicone systems have been prepared using a variety of approaches, including addition-cure and condensation-cure chemistries.

Addition-cure refers to a system where curing is achieved through the addition of Si-H across a pi ($\pi$) bond, i.e., hydrosilation. One advantage of addition-cure systems is that precious metal catalysts (e.g., platinum catalysts) are exceptionally efficient, e.g., even with low parts per million (ppm) of platinum, the hydrosilylation reaction can occur rapidly without producing by-products. Both thermal-cure and radiation-cure, precious metal catalysts have been used in addition-cure (i.e., hydrosilation) silicone systems.

Condensation cure refers to a system where curing is achieved through the reaction of Si-OH and Si-H groups or Si-OH and Si-OH groups leading to the formation of Si-O-Si linkages and hydrogen gas or water. Exemplary condensation-cure silicone systems include those comprising hydroxyl-functional polyorganosiloxane(s) and hydride-functional silane(s). Typically, condensation-cure silicone systems have been cured with tin catalysts. Tin-based catalysts catalyze two major reactions, i.e., chain-extension reactions involving two silanol groups, and cross-linking or curing reactions involving a silanol group and a silicon hydride group.

In co-filed U.S. Patent Application No. 61/578,039 (Rathore et al., filed December 20, 2011), the discovery that platinum catalysts could be used in condensation-cure silicone systems was described. Co-filed U.S. Patent Application No. 61/578,031 (Rathore et al., filed December 20, 2011) describes the discovery that photoactivated precious metal catalysts, including platinum, can be used in condensation-cure silicone systems. US2012172472 discloses a composition of polyorganosiloxanes bearing SiH and SiOH groups which undergo dehydrocondensation reaction in the presence of a ß-dicarbonyl iron(III) catalyst.

The present disclosure relates to the inventors surprising discovery that synergistic improvements in the cure of silicone systems could be achieved by combining an iron-catalyzed silicone system with a titanium complex. In various embodiments, such "dual cure" silicone systems exhibit one or more of the following synergistic effects: (1) reduction in the amount of iron catalyst, (2) reduction in the amount of residual silicone, and (4) improvement in control of the release of adhesives from the cured silicone compositions.

Generally, the iron-catalyzed silicone systems comprise a condensation-cure silicone system and a catalyst comprising a iron complex. In some embodiments, the silicone system comprises a hydroxyl-functional polyorganosiloxane and a hydride-functional silane. Generally, the hydride-functional silane comprises at least two, and in some embodiments three or more silicon-bonded hydrogen atoms.

Generally, any known hydroxyl-functional polyorganosiloxane suitable for use in condensation-cure systems can be used in the compositions of the present disclosure, and such materials are well-known and readily obtainable. Exemplary polyorganosiloxanes include poly(dialkylsiloxane) (e.g., poly(dimethylsiloxane)), poly(diarylsiloxane) (e.g., poly(diphenylsiloxane)), poly(alkylarylsiloxane) (e.g., poly(methylphenylsiloxane)), poly(dialkylalkylarylsiloxane) (e.g., poly(dimethylmethylphenylsiloxane)), and poly(dialkyldiarylsiloxane) (e.g., poly(dimethyldiphenylsiloxane). Both linear and branched polyorganosiloxanes may be used. In some embodiments, one or more of the organo groups may be halogenated, e.g., fluorinated.

Exemplary hydroxyl-functional polyorganosiloxanes include silanol-terminated polydimethylsiloxanes including, e.g., those available from Gelest, Inc., Morrisville, Pennsylvania, including those available under the trade names DMS-S12, -514, -S15, -S21, -S27, -S31, -S32, -S33,-S35,- S42, -S45, and -S51; and those available from Dow Coming Corporation, Midland, Michigan, including those available under the trade names XIAMETER OHX Polymers and 3-0084 Polymer, 3-0113 Polymer, 3-0133 Polymer, 3-0134 Polymer, 3-0135 Polymer, 3-0213 Polymer, and 3-3602 Polymer.

Generally, any known hydride-functional silane suitable for use in condensation-cure systems can be used in the compositions of the present disclosure, and such materials are well-known and readily obtainable. Exemplary hydride-functional silanes include those available from Dow Coming Corporation, including those available under the trade name SYL-OFF (e.g., SYL-OFF 7016, 7028, 7048, 7137, 7138, 7367, 7678, 7689, and SL-series crosslinkers), and those available from Gelest, Inc.

Condensation cure silicone systems that contain both one or more silanol-terminated polyorganosiloxane(s) and one or more hydride-functional silane crosslinkers are also known. Examples of such systems include those available from Dow Coming Corporation, including those available under the trade names SYL-OFF (e.g., SYL-OFF 292 and SYL-OFF 294).

As is known by one of ordinary skill in the art, the relative amounts of the hydroxyl-functional polyorganosiloxane(s) and the hydride-functional silane(s) can be selected to obtain a variety of use compositions. Factors affecting such selections include the specific polyorganosiloxane(s) and silane(s) selected, the relative functionality of the silane(s) compared to the polyorganosiloxane(s), the desired degree of cross-linking and/or chain extension, and the desired final properties including, e.g., release force, mechanical properties, cure conditions, percent extractables, and the like. Generally, the relative amounts are selected such that ratio of molar equivalents of hydroxyl functionality to molar equivalents of hydride functionality is between 0.01 and 10, inclusive, e.g., between 0.04 and 2, inclusive.

Generally, the iron-catalyzed silicone systems comprise an iron complex, e.g., Fe(III) complex. Exemplary catalysts suitable for use in various embodiments of the curable composition of the present disclosure include those comprising iron (III) and at least one thermally-displaceable or radiation-displaceable ligand. Such a displaceable ligand is one that, when associated with iron (III) inhibits its ability to catalyze, but, when exposed to heat or to actinic radiation, is either displaced or otherwise modified such that the iron (III) becomes available to catalyze the curing reaction.

Suitable forms of actinic radiation include photochemically active radiation and particle beams, including, but not limited to, accelerated particles (for example, electron beams); and electromagnetic radiation (for example, microwaves, infrared radiation, visible light, ultraviolet light, X-rays, and gamma-rays). In some embodiments, the ligand(s) are thermally-displaceable upon exposure to temperatures of about 50°C to about 150°C (more preferably, about 80°C to about 130°C). In some embodiments, the ligand(s) are radiation-displaceable upon exposure to actinic radiation having a wavelength of about 200 nanometers to about 800 nanometers (more preferably, about 200 nanometers to about 400 nanometers).

Useful ligands include those that comprise at least one moiety selected from beta-diketonato (β-diketonato), eta-bonded cyclopentadienyl (η-cyclopentadienyl), sigma-bonded aryl (σ-acryl), halo, and combinations thereof. Preferably, the ligands comprise at least one moiety selected from beta-diketonato, halo, and combinations thereof (more preferably, at least one moiety selected from beta-diketonato and combinations thereof). Suitable beta-diketonato moieties include 2,4-pentanedionato, 2,4-hexanedionato, 2,4-heptanedionato, 3,5-heptanedionato, 1-phenyl-1,3-heptanedionato, 1,3-diphenyl-1,3-propanedionato, and combinations thereof; and suitable halo moieties include chloro, bromo, and combinations thereof.

Representative examples of useful catalysts include (a) sigma-bonded aryl complexes of iron (III), including those of the formula COD-M-(Aryl)2, wherein COD is a cyclooctadienyl group, M is iron (III), and Aryl is a sigma-bonded aryl moiety that is unsubstituted or substituted (for example, a phenyl group optionally substituted with one or more of alkyl, alkoxy, halogen, perfluoroalkyl, and perfluoroalkoxy); (b) η-cyclopentadienyl complexes of iron (III), including those of the formula CpFe3+(Rb)3, wherein Cp represents a cyclopentadienyl moiety that is eta-bonded to iron (III), and each Rb group is, independently, a saturated aliphatic group having from one to about eighteen carbon atoms and sigma bonded to iron (III) (for example, trialkyl(cyclopentadienyl)iron (III) complexes), as well as complexes in which the cyclopentadienyl moiety is substituted with a C1 to C4 hydrocarbon (for example, trimethyl(methylcyclopentadienyl)iron (III)); (c) beta-diketonato complexes of iron (III), including those derived from beta-diketones of the formula R1COCHR2COR3, wherein R1 is a substituted or unsubstituted, linear, cyclic, or branched C1-C30 hydrocarbon-based radical (aliphatic, alicyclic, or aromatic; preferably, aliphatic or aromatic; more preferably, aliphatic); R2 is hydrogen or a hydrocarbon-based (preferably, aliphatic; more preferably, alkyl) radical (preferably, having no more than 4 carbon atoms); R3 is a substituted or unsubstituted, linear, cyclic, or branched C1-C30 hydrocarbon-based radical (aliphatic, alicyclic, or aromatic; preferably, aliphatic or aromatic; more preferably, aliphatic), or an -OR4 radical, wherein R4 is a substituted or unsubstituted, linear, cyclic, or branched C1-C30 hydrocarbon-based radical (preferably, aliphatic or alicyclic; more preferably, aliphatic); wherein R1 and R2 optionally can be bonded together to form a ring; and wherein R2 and R4 optionally can be bonded together to form a ring; (d) halo complexes of iron (III); and the like; and combinations thereof.

In some embodiments, preferred catalysts include iron (III) 2,4-pentanedionate, iron (III) 2,4-hexanedionate, iron (III) 2,4-heptanedionate, iron (III) 3,5-heptanedionate, iron (III) 1-phenyl-1,3-heptanedionate, iron (III) 1,3-diphenyl-1,3-propanedionate, iron (III) chloride, iron (III) bromide, and combinations thereof. More preferred catalysts include iron (III) 2,4-pentanedionate, iron (III) 2-ethylhexanoate, iron (III) chloride, iron (III) bromide, and combinations thereof (even more preferably, iron (III) 2,4-pentanedionate, iron (III) 2-ethylhexanoate, and combinations thereof; most preferably, iron (III) 2,4-pentanedionate).

Generally, the amount of iron catalyst present will be at least 1 part per million (ppm) iron based on the total weight of the hydroxyl-functional polyorganosiloxane and the hydride-functional silane, e.g., at least 5 ppm, or even at least 10 ppm. In some embodiments, the composition comprises 5 to 200 ppm iron based on the total weight of the hydroxyl-functional polyorganosiloxane and the hydride-functional silane, e.g., 5 to 100 ppm, 10 to 100 ppm, or even 10 to 50 ppm.

The compositions of the present disclosure also includes a Ti(IV) complex suitable as a catalyst, titanium(IV) 2-ethylhexoxide.

In some embodiments, the compositions of the present disclosure include at least 3 wt.%, e.g., at least 5 wt.% or even at least 8 wt.% of the Ti(IV) complex(es), based on the total weight of solids in the composition. In some embodiments, the compositions of the present disclosure include no greater than 30 wt.%, e.g., no greater than 20 wt.%, or even no greater than 15 wt.%, of the Ti(IV) complex(es), based on the total weight of solids in the composition. In some embodiments, the compositions of the present disclosure include 3 to 30 wt.%, e.g., 5 to 20 wt.%, or even 8 to 15 wt.% of the Ti(IV) complex(es)), based on the total weight of solids in the composition.

In some embodiments, the compositions of the present disclosure also include one or more alkoxy-functional silane crosslinkers. Any known alkoxy-functional silane crosslinker may be used. Generally, such crosslinkers include at least two, and preferably three or more, alkoxy-functional groups. Exemplary alkoxy-functional silane crosslinkers suitable for use in various embodiments of the present disclosure include divinyldiethoxysilane, triethoxysilane, tetraethoxysilane, and bis(triethoxysilyl)ethane (alternatively known as hexaethoxydisilethylene). In some embodiments, combinations of two or more alkoxy-functional silane crosslinkers may be used.

In some embodiments, the compositions of the present disclosure include at least 3 wt.%, e.g., at least 5 wt.% or even at least 8 wt.% of the alkoxy-functional silane(s), based on the total weight of solids in the composition. In some embodiments, the compositions of the present disclosure include no greater than 30 wt.%, e.g., no greater than 20 wt.%, or even no greater than 15 wt.%, of the alkoxy-functional silane(s), based on the total weight of solids in the composition. In some embodiments, the compositions of the present disclosure include 3 to 30 wt.%, e.g., 5 to 20 wt.%, or even 8 to 15 wt.% of the alkoxy-functional silane(s), based on the total weight of solids in the composition.

When cured, the dual condensation cure systems of the present disclosure may be suitable for a wide variety of applications. In some embodiments, the cured compositions may be suitable as release layers for release liners. In some embodiments, such liners may be suitable for use with an adhesive article.

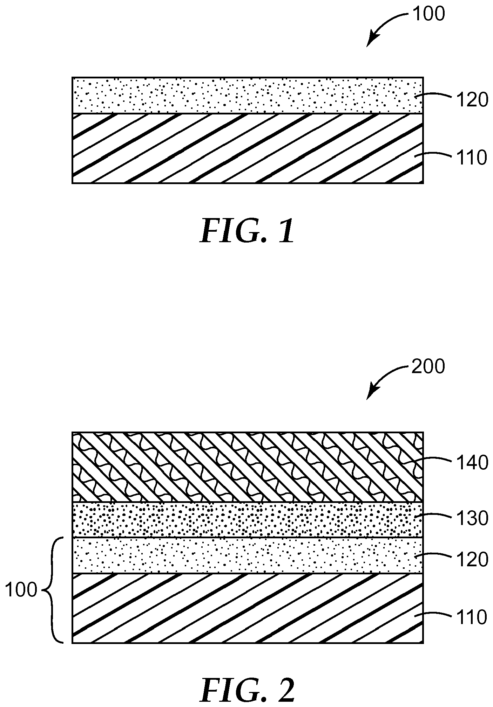

An exemplary release article **100** according to some embodiments of the present disclosure is illustrated in **FIG. 1.** Release article **100** includes release layer **120** and substrate **110**. In some embodiments, release layer **120** is directly bonded to substrate **110**. In some embodiments, one or more layers, e.g., primer layers, may be located between release layer **120** and substrate **110**. Any known material may be suitable for use in substrate **110** including paper and polymeric films. Any of the compositions of the present disclosure may coated on such substrates and cured to provide the release layer. Conventional coating and curing methods are well known, and one of ordinary skill in the art may select those appropriate for the selected condensation-cure composition and substrate selected.

An exemplary adhesive article **200** incorporating release article **100** is shown in **FIG 2.** Adhesive layer **130** is in direct contact with the surface of release layer **120,** opposite substrate **110.** Generally, any known adhesive may be used and one of ordinary skill in the art can select an adhesive appropriate for the selected release layer. In some embodiments, acrylic adhesives may be used. In some embodiments, adhesive article **200** may also include optional layer **140,** which may be adhered directly to adhesive layer **130,** opposite release layer **120.** In some embodiments, one or more intervening layers, e.g., primer layers, may be present between adhesive layer **130** and optional layer **140.** Optional layer **140** may be any of a wide variety of known materials including paper, polymeric film, foam, woven and nonwoven webs, scrims, foils (e.g., metal foils), laminates, and combinations thereof.

Examples.

Unless otherwise noted, all parts, percentages, ratios, etc., in the examples and in the remainder of the specification are by weight. Unless otherwise noted, all chemicals were obtained from, or are available from, chemical suppliers such as Sigma-Aldrich Chemical Company, St. Louis, Missouri.

"Silicone-A" was a 30 percent solids dispersion of a blend of reactive siloxane polymers in toluene (said to comprise dimethyl siloxane, hydroxy-terminated in toluene). This silanol-functional polyorganosiloxane was obtained from Dow Coming Corporation, Midland, Michigan, under the trade designation SYL-OFF SB 2792.

"Sificone-B" was a 100 weight percent solids silane crosslinker said to comprise methylhydrogen siloxane. This hydride-functional silane was obtained from Dow Coming Corporation under the trade designation SYL-OFF 7048.

"Fe-Cat" was iron (III) 2,4-pentanedionate, an Fe(III) catalyst alternatively known as iron (III) tris(acetylacetonate), or tris(pentane-2,4-dionato-O,O) iron (III). It was obtained from Sigma-Aldrich Chemical Company, St. Louis. Missouri, and was used as a 10 weight percent solution in dichloromethane.

"Ti-Comp" was titanium (IV)-2-ethylhexoxide, a Ti(IV) complex alternatively known as tetraoctyltitanate. It was obatined from Gelest, Inc., Morrisville, Pennsylvania.

Silicone Coat Weight Procedure. Silicone coat weights were determined by comparing approximately 3.69 centimeter diameter samples of coated and uncoated substrates using an EDXRF spectrophotometer (obtained from Oxford Instruments, Elk Grove Village, Illinois under trade designation OXFORD LAB X3000).

Silicone Extractables Procedure. Unreacted silicone extractables were measured on cured thin film formulations to ascertain the extent of silicone crosslinking immediately after the coatings were cured. The percent extractable silicone, (i.e., the unreacted silicone extractables), a measure of the extent of silicone cure on a release liner, was measured by the following method.

The silicone coat weight of a 3.69 centimeter diameter sample of coated substrate was determined according to the Silicone Coat Weight Procedure. The coated substrate sample was then immersed in and shaken with methyl isobutyl ketone (MIBK) for 5 minutes, removed, and allowed to dry. The silicone coating weight was measured again according to the Silicone Coat Weight Procedure. Silicone extractables were attributed to the weight difference between the silicone coat weight before and after extraction with MIBK as a percent using the following formula:

$$(a - b) / a * 100 = \text{Percent Extractable Silicone}$$

wherein a = initial coating weight (before extraction with MIBK); and

wherein b = final coating weight (after extraction with MIBK).

Release Liner Adhesion Procedure. The 180° angle peel adhesion strength of a release liner to an adhesive sample was measured in the following manner, which is generally in accordance with the test method described in Pressure Sensitive Tape Council PSTC-101 method D (Rev 05/07) "Peel Adhesion of Pressure Sensitive Tape."

The exemplary release liners prepared as described below were coated with an acrylic radiation-sensitive syrup (90 parts by weight isooctyl acrylate and 10 parts by weight acrylic acid) with a notched bar coater to form a continuous coating of acrylic syrup nominally 50 micrometers thick. The resulting "wet" coating was then polymerized to more than 95 % conversion by exposing the acrylic syrup to UV-A irradiation from 20W 350BL lamps (available from Osram Sylvania, Danvers, MA) in a nitrogen-inerted environment. Upon curing, the polymerized syrup formed a pressure-sensitive adhesive (PSA) transfer tape on the release liner. The resulting adhesive transfer tape was aged for 7 days prior to testing for release liner adhesion.

After aging, a 2.54 centimeter wide and approximately 20 centimeter in length sample of the adhesive transfer tape was cut using a specimen razor cutter. The cut sample was applied with its exposed adhesive side down and lengthwise onto the platen surface of a peel adhesion tester (Slip/Peel Tester, Model 3M90, obtained from Instrumentors, Incorporated, Strongsville, Ohio). The applied sample was rubbed down on the test panel using light thumb pressure. The adhesive transfer tape on the platen surface was then rolled twice with a 2 kilograms rubber roller at a rate of 61 centimeter/minute.

The release liner was carefully lifted away from the adhesive transfer tape on the platen surface, doubled-back at an angle of 180 degrees, and secured to clamp of the peel adhesion tester. The 180 degree angle release liner peel adhesion strength was then measured at a peel rate of 38.1 millimeters/second. A minimum of two test specimens were evaluated with results obtained in gram/inch which were used to calculate the average peel force. This average value was then converted to Newtons per meter (N/m). All release tests were carried out in a facility at constant temperature (23 °C) and constant relative humidity (50 percent).

All samples were prepared by first diluting Silicone-A (3.0 grams) with heptane (12 grams) followed by addition of Silicone-B (0.1 gram) and either one or both of the Fe(III) catalyst and the Ti(IV) complex, as summarized in Tables 1 and 2, below. The resulting formulation was thoroughly mixed and coated on one side of a corona-treated, 50 micron thick PET film obtained from Mitsubishi Polyester Film, Inc., Greer, South Carolina with a # 5 Mayer bar. The coated layer was cured at 120 °C for 60 seconds in an oven equipped with solvent exhaust.

The Silicone Extractables Procedure was used as a measure of the extent of silicone cure on a release liner. Table 1 summarizes the compositions and results of the Comparative Examples, which contained either an iron catalyst or a titanium complex alone. Table 2 summarizes the compositions and results of the Examples, which contained a combination of an Fe(III) catalyst and a Ti(IV) complex.

Table 1: Composition and Percent Extractables of the Comparative Examples.

|  | CE-1 | CE-2 | CE-3 | CE-4 | CE-5 | CE-6 |
|---|---|---|---|---|---|---|
| Heptane (g) | 12 | 12 | 12 | 12 | 12 | 12 |
| Silicone-A (g) | 3.0 | 3.0 | 3.0 | 3.0 | 3.0 | 3.0 |
| Silicone-B (g) | 0.1 | 0.1 | 0.1 | 0.1 | 0.1 | 0.1 |
| Fe-Cat (wt.%) | 1 | 1.5 | 2 | 3 | - | - |
| Ti-Comp (wt.%) | - | - | - | - | 2.5 | 5 |
| Extractables (wt.%) | 33 | 28 | 20 | 12 | 90 | 87 |

Table 2: Composition and Percent Extractables of the Examples.

|  | EX-1 | EX-2 | EX-3 | EX-4 | EX-5 | EX-6 | EX-7 |
|---|---|---|---|---|---|---|---|
| Heptane (g) | 12 | 12 | 12 | 12 | 12 | 12 | 12 |
| Silicone-A (g) | 3.0 | 3.0 | 3.0 | 3.0 | 3.0 | 3.0 | 3.0 |
| Silicone-B (g) | 0.1 | 0.1 | 0.1 | 0.1 | 0.1 | 0.1 | 0.1 |
| Fe-Cat (wt.%) | 1.5 | 2 | 3 | 1 | 1.5 | 2 | 3 |
| Ti-Cat (wt.%) | 2.5 | 2.5 | 2.5 | 5 | 5 | 5 | 5 |
| Extractables (wt.%) | 23 | 19 | 9 | 23 | 18 | 16 | 7 |

Comparing the results summarized in Tables 1 and 2, it is clear that the dual cure system yielded significant improvements in cure (lower percent extractables) as compared to single cure systems such as CE-1 through CE-4 (iron-only) and CE-5 and CE-6 (titanium-only).

The Release Liner Adhesion Procedure was used to measure the effectiveness of release liners prepared using the compositions according to the examples and comparative examples. The release value is a quantitative measure of the force required to remove a flexible adhesive from the release liner at a specific angle and rate of removal. Results are summarized in Table 3.

Table 3: Release values for single and dual cure systems.

|  | CE-3 | CE-4 | EX-6 | EX-7 |
| --- | --- | --- | --- | --- |
| Heptane (g) | 12 | 12 | 12 | 12 |
| Silicone-A (g) | 3.0 | 3.0 | 3.0 | 3.0 |
| Silicone-B (g) | 0.1 | 0.1 | 0.1 | 0.1 |
| Fe-Cat (wt.%) | 2 | 3 | 2 | 3 |
| Ti-Comp (wt.%) | - | - | 5 | 5 |
| Extractables (wt.%) | 20 | 12 | 16 | 7 |
| Release (N/m) | 19.3 | 25.8 | 13.5 | 7.7 |

As shown in Table 3, lower release values were obtained with the dual cure system using both iron and titanium (EX-6 and EX-7) as compared to single cure, iron-only systems (CE-3 and CE-4). The percent extractables of the titanium only samples (CE-5 and CE-6) were too high to perform release testing.

## Claims

1. A dual cure silicone system comprising a silanol-functional polyorganosiloxane, a hydride-functional silane, an Fe(III) catalyst, and a Ti(IV) complex, wherein the Ti(IV) complex comprises titanium (IV)-2-ethylhexoxide.

2. The dual cure silicone system according to claim 1, wherein the Fe(III) catalyst is selected from the group consisting of iron (III) 2,4-pentanedionate, iron (III) 2,4-hexanedionate, iron (III) 2,4-heptanedionate, iron (III) 3,5-heptanedionate, iron (III) 1-phenyl-1,3-heptanedionate, iron (III) 1,3-diphenyl-1,3-propanedionate, iron (III) chloride, iron (III) bromide, and combinations thereof.

3. The dual cure silicone system according to claim 2, wherein the Fe(III) catalyst comprises iron (III) 2,4-pentanedionate.

4. The dual cure silicone system according to any one of the preceding claims, wherein the system comprises 1 to 5 weight percent of the Fe(III) catalyst and 2 to 10 weight percent of the Ti(IV) complex, based on the total weight of the silanol-functional polyorganosiloxane, the hydride-functional silane, the Fe(III) catalyst, and the Ti(IV) complex.

5. The dual cure silicone system according to any one of the preceding claims, wherein the system comprises 1 to 3 percent by weight of the Fe(III) catalyst and 2 to 5 weight percent of the Ti(IV) complex, based on the total weight of the silanol-functional polyorganosiloxane, the hydride-functional silane, the Fe(III) catalyst, and the Ti(IV) complex.

6. An article comprising a crosslinked silicone layer comprising the reaction product of the dual cure silicone system according to any one of the preceding claims.

7. The article of claim 6, further comprising a substrate, wherein the crosslinked silicone layer covers at least a portion of a first surface of the substrate.

8. The article of claim 7, further comprising an adhesive layer, wherein the adhesive layer covers at least a portion of the crosslinked silicone layer.

## Patentansprüche

1. Zweifach härtendes Silikonsystem, umfassend ein silanolfunktionelles Polyorganosiloxan, ein hybridfunktionelles Silan, einen Fe(III)-Katalysator und einen Ti(IV)-Komplex, wobei der Ti(IV)-Komplex Titan(IV)-2-ethylhexoxid umfasst.

2. Zweifach härtendes Silikonsystem nach Anspruch 1, wobei der Fe(III)-Katalysator ausgewählt ist aus der Gruppe bestehend aus Eisen(III)-2,4-pentandionat, Eisen(III)-2,4-hexandionat, Eisen(III)-2,4-heptandionat, Eisen(III)-3,5-heptandionat, Eisen(III)-1 -phenyl-1,3-heptandionat, Eisen(III)-1,3-diphenyl-1,3-propandionat, Eisen(III)-chlorid, Eisen(III)-bromid und Kombinationen davon.

3. Zweifach härtendes Silikonsystem nach Anspruch 2, wobei der Fe(III)-Katalysator Eisen(III)-2,4-pentandionat umfasst.

4. Zweifach härtendes Silikonsystem nach einem der vorstehenden Ansprüche, wobei das System zu 1 bis 5 Gewichtsprozent den Fe(III)-Katalysator und zu 2 bis 10 Gewichtsprozent den Ti(IV)-Komplex, basierend auf dem Gesamtgewicht des silanolfunktionellen Polyorganosiloxans, des hybridfunktionellen Silans, des Fe(III)-Katalysators und des Ti(IV)-Komplexes, umfasst.

5. Zweifach härtendes Silikonsystem nach einem der vorstehenden Ansprüche, wobei das System zu 1 bis 3 Gewichtsprozent den Fe(III)-Katalysator und zu 2 bis 5 Gewichtsprozent den Ti(IV)-Komplex, basierend auf dem Gesamtgewicht des silanolfunktionellen Polyorganosiloxans, des hybridfunktionellen Silans, des Fe(III)-Katalysators und des Ti(IV)-Komplexes, umfasst.

6. Artikel, umfassend eine vernetzte Silikonschicht, umfassend das Reaktionsprodukt des zweifach härtenden Silikonsystems nach einem der vorstehenden Ansprüche.

7. Artikel nach Anspruch 6, ferner umfassend ein Substrat, wobei die vernetzte Silikonschicht wenigstens einen Abschnitt einer ersten Oberfläche des Substrats bedeckt.

8. Artikel nach Anspruch 7, ferner umfassend eine Klebstoffschicht, wobei die Klebstoffschicht wenigstens einen Abschnitt der vernetzten Silikonschicht bedeckt.

## Revendications

1. Système de silicone à double durcissement comprenant un polyorganosiloxane à fonction silanol, un silane à fonction hydrure, un catalyseur au Fe(III), et un complexe de Ti(IV), dans lequel le complexe de Ti(IV) comprend du (IV)-2-éthylhexoxyde de titane.

2. Système de silicone à double durcissement selon la revendication 1, dans lequel le catalyseur au Fe(III) est choisi dans le groupe constitué de 2,4-pentanedionate de fer (III), 2,4-hexanedionate de fer (III), 2,4-heptanedionate de fer (III), 3,5-heptanedionate de fer (III), 1-phényl-1,3-heptanedionate de fer (III), 1,3-diphényl-1,3-propanedionate de fer (III), chlorure de fer (III), bromure de fer (III), et des combinaisons de ceux-ci.

3. Système de silicone à double durcissement selon la revendication 2, dans lequel le catalyseur au Fe(III) comprend du 2,4-pentanedionate de fer (III).

4. Système de silicone à double durcissement selon l'une quelconque des revendications précédentes, où le système comprend 1 à 5 pour cent en poids du catalyseur au Fe(III) et 2 à 10 pour cent en poids du complexe de Ti(IV), sur la base du poids total du polyorganosiloxane à fonction silanol, du silane à fonction hydrure, du catalyseur au Fe(III) et du complexe de Ti(IV).

5. Système de silicone à double durcissement selon l'une quelconque des revendications précédentes, où le système comprend 1 à 3 pour cent en poids du catalyseur au Fe(III) et 2 à 5 pour cent en poids du complexe de Ti(IV), sur la base du poids total du polyorganosiloxane à fonction silanol, du silane à fonction hydrure, du catalyseur au Fe(III) et du complexe de Ti(IV).

6. Article comprenant une couche de silicone réticulée comprenant le produit de réaction du système de silicone à double durcissement selon l'une quelconque des revendications précédentes.

7. Article selon la revendication 6, comprenant en outre un substrat, dans lequel la couche de silicone réticulée couvre au moins une partie d'une première surface du substrat.

8. Article selon la revendication 7, comprenant en outre une couche adhésive, dans lequel la couche adhésive couvre au moins une partie de la couche de silicone réticulée.

**FIG. 1**

**FIG. 2**

## REFERENCES CITED IN THE DESCRIPTION

**Patent documents cited in the description**

- US 61578039 A, Rathore
- US 61578031 A, Rathore
- US 2012172472 A